# EUROPEAN PATENT SPECIFICATION

(11) **EP 2 383 694 B1**
(45) Date of publication and mention of the grant of the patent: **09.05.2018**
(21) Application number: 09839162.6
(22) Date of filing: 28.01.2009
(51) Int. Cl.: G06K 9/00, G06T 1/00

(54) **FINGERPRINT READER AND ELECTRONIC DEVICE**
LESEGERÄT FÜR FINGERABDRÜCKE UND ELEKTRONISCHES GERÄT
LECTEUR D'EMPREINTE DIGITALE ET DISPOSITIF ÉLECTRONIQUE

(43) Date of publication of application: 02.11.2011
(73) Proprietor: Fujitsu Limited, Kawasaki-shi, Kanagawa 211-8588 (JP)
(72) Inventor: OKAZAKI, Takeshi, Kawasaki-shi Kanagawa 211-8588 (JP)
(74) Representative: Wilding, Frances Ward
(86) International application number: PCT/JP2009/051354
(87) International publication number: WO 2010/086970

(56) References cited:
- EP-A1- 1 545 102
- JP-A- 10 283 464
- JP-A- 2004 344 342
- JP-A- 2005 160 846
- JP-A- 2005 278 170
- JP-A- 2006 107 246
- JP-A- 2006 158 952
- JP-A- 2008 065 767
- JP-U- 4 004 356
- US-A1- 2008 238 878

## Description

### Technical Field

The present invention relates to a fingerprint reader device and an electronic apparatus.

### Background Art

In recent years, fingerprint reader devices with a slide-type or sweep-type (hereinafter referred to as a slide-type) fingerprint sensor that can be implemented as a small-size device at low cost have started to become widely used in the field of information processing apparatuses such as PCs (personal computers), PDA (Personal Digital Assistants), and portable phones.

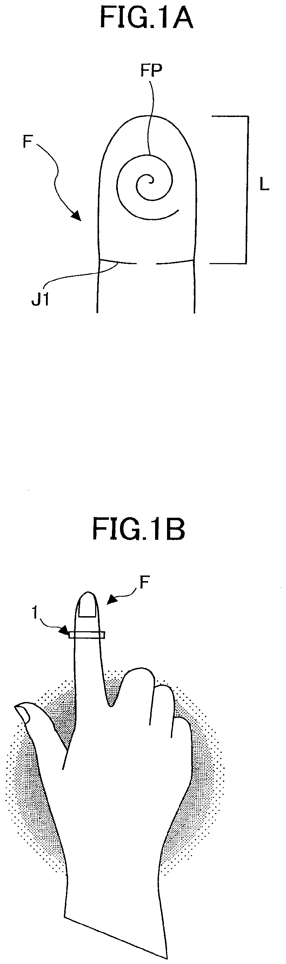

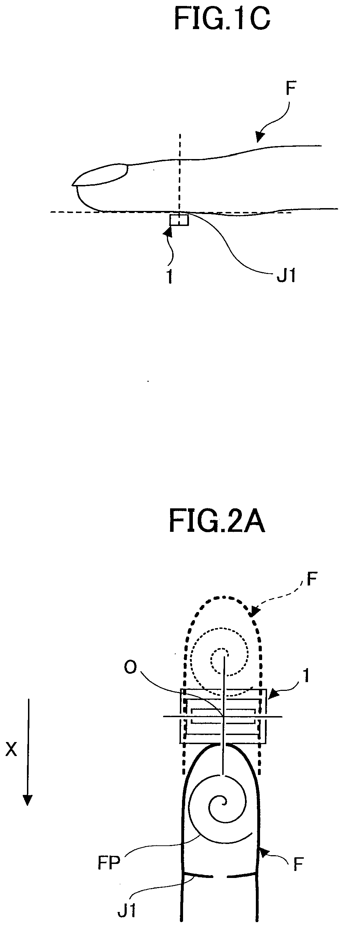

Figs. 1A through 1C are drawings for illustrating a fingerprint scan range and a scan method of such a slide-type fingerprint reader device. In a slide-type fingerprint reader device, a portion of a finger F from a first joint J1 to its tip (i.e., the portion indicated by an arrow L) is used as a scan range. The finger may thus need to be placed properly on a scan surface such that the first joint portion J1 of the scanned finger F is placed at around the center of a fingerprint sensor 1 (see Fig. 1B and Fig. 1C).

A fingerprint FP can be reliably scanned when the finger F is slid in a direction of an arrow X such that the center of the finger F passes through the center point O of the fingerprint sensor 1 as illustrated in Fig. 2A. However, the fingerprint sensor 1 is obscured behind the finger F at the time of fingerprint scanning. It may thus be difficult to place the first joint J1 properly on the fingerprint sensor 1.

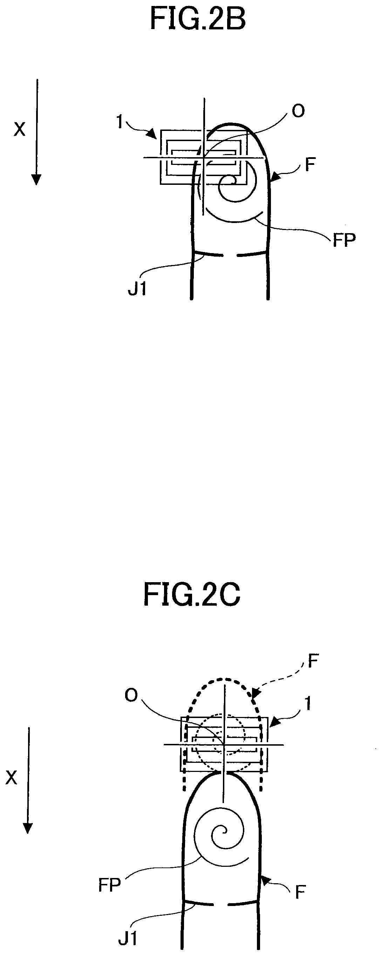

One may fail to properly position the first joint J1 at the center point O of the fingerprint sensor 1. For example, the position of the first joint J1 may deviate to the left or right relative to the center point O of the fingerprint sensor 1 as illustrated in Fig. 2B, or the position of the first joint J1 may be placed below the center point O of the fingerprint sensor 1 as illustrated in Fig. 2C. In such cases, part of the image that needs to be scanned may be missing, resulting in an insufficient image and thus authentication failure.

In order to solve such a problem, a method of placing a finger may comprise aligning the first joint of the finger with the center point of the fingerprint sensor by keeping visual contact with the fingerprint sensor and its surrounding position from an angle slightly off to the left or right from the position immediately above the fingerprint sensor such as to avoid obscuring the fingerprint sensor with the finger. The problem with this method, however, is that one is forced to take a cramped position each time the fingerprint scan is performed.

As a method for solving the above-noted problems, Patent Document 1 discloses the structure in which a pair of ridges arranged substantially in parallel to each other is provided as guide members, and the ridges serving as the guide members extend in the direction in which a finger is slid. Further disclosed is the provision of a roller and two projecting guide members immediately behind a transparent member for scanning a fingerprint, the projecting guide members spaced at an interval slightly shorter than the finger width and extending in the direction in which a finger is slid (front to rear).

Patent Document 2 discloses the configuration in which a switch is provided at a short distance from the fingerprint sensor anteriorly in the fingerprint slide direction to detect the presence or absence of a finger F of a subject. This switch is configured to be pressed down by the ball of the finger distal to the first joint.

Further, Patent Document 3 discloses a pair of case pads provided on both sides of a V-letter-shape groove such that these case pads serve as indicators for the position of a finger at the time of fingerprint detection. When a fingerprint is to be detected by a sweep-type fingerprint sensor, the finger is placed such that the first joint closest to the finger tip is situated on the straight line connecting between the two case

Further, Patent Document 4 is relevant.
[Patent Document 1] Japanese Laid-open Patent Publication No. 2004-240924
[Patent Document 2] Japanese Laid-open Patent Publication No. 2004-272745
[Patent Document 3] Japanese Laid-open Patent Publication No. 2005-259150
[Patent Document 4] Japanese Laid-open Patent Publication No. 2008-065767

### Disclosure of Invention

### Problem to be Solved by Invention

In the method disclosed in above-noted Patent Document 1, the ball of a finger is placed evenly in contact with the two projecting guide members spaced at an interval slightly shorter than the finger width. With this arrangement, it may be possible to guide the initial position of the finger to the center position in the direction perpendicular to the finger slide direction on the fingerprint sensor. However, the first joint of the finger may fail to be placed around the center point of the fingerprint sensor in the finger slide direction on the fingerprint sensor.

In the method disclosed in Patent Document 2, the switch is pressed down by the ball of a finger distal to the first joint. It is not guaranteed, however, that the center of the ball of the finger can press the switch by relying on a view of the dorsal side of the finger. This may result in an insufficient fingerprint image, creating a risk of having an authentication failure.

In the method disclosed in Patent Document 3, it is not easy to ascertain the position of the first joint by relying on a view of the dorsal side of the finger. This may result in an insufficient fingerprint image, creating a risk of failing to perform reliable authentication.

### Means to Solve the Problem

It is a general object of the present invention to provide an improved, useful fingerprint reader device and electronic apparatus that obviate the above-described problems of the related art.

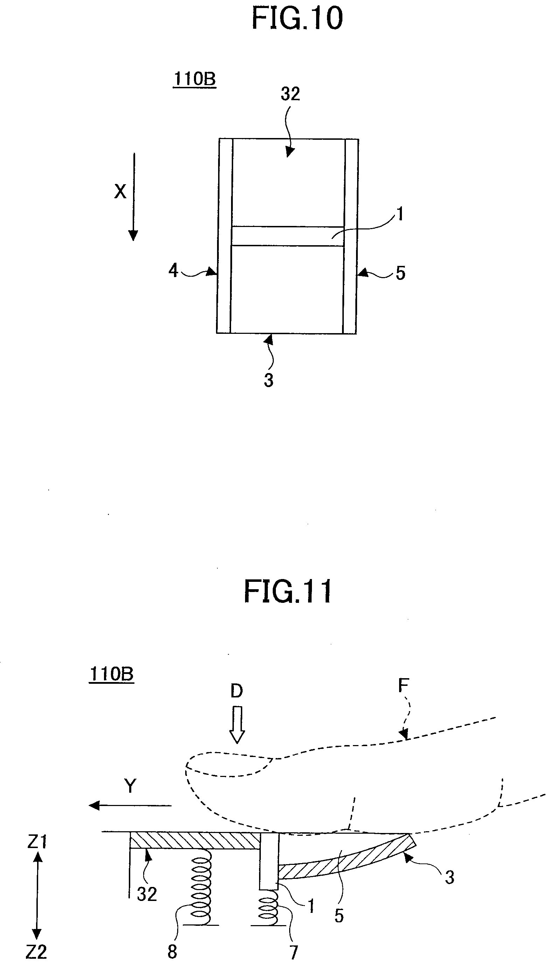

It is a further detailed object of the present invention to provide a fingerprint reader device and an electronic device that can ensure finger placement at a proper scan position without forcing a cramped position, thereby being able to perform accurate fingerprint authentication The invention is defined in the independent claims. Optional embodiments are set out in the dependent claims. The invention is exemplified using figures 10-17 and corresponding text. Figures 1-9 are just for illustration of some general principles.

### Advantage of the Invention

The above-noted fingerprint reader device ensures the correct positioning of a finger at a proper position relative to the fingerprint sensor, thereby improving authentication accuracy.

### Brief Description of Drawings

Fig. 1A is a drawing for illustrating a fingerprint scan range.
Fig. 1B is a drawing for illustrating a method of sliding a finger at the time of scanning a fingerprint (part 1).
Fig. 1C is a drawing for illustrating a method of sliding a finger at the time of scanning a fingerprint (part 2).
Fig. 2A is a drawing for illustrating the position of a fingerprint sensor and the way a finger is placed (in a proper arrangement).
Fig. 2B is a drawing for illustrating the position of a fingerprint sensor and the way a finger is placed (in an improper arrangement: part 1) .
Fig. 2C is a drawing for illustrating the position of a fingerprint sensor and the way a finger is placed (in an improper arrangement: part 2) .
Fig. 3 is an oblique perspective view illustrating a personal computer provided with a fingerprint reader device of a first embodiment.
Fig. 4 is a drawing illustrating an enlarged view of a portion indicated by an arrow X in Fig. 3 during a fingerprint scan.
Fig. 5 is a drawing illustrating an enlarged view of a portion indicated by an arrow X in Fig. 3 after a fingerprint scan.
Fig. 6 is a plan view illustrating the fingerprint reader device according to an illustrative example.
Fig. 7 is a cross-sectional view illustrating the fingerprint reader device according to an illustrative example before a finger is slid.
Fig. 8 is a cross-sectional view illustrating the fingerprint reader device according to an illustrative example during a finger slide (part 1).
Fig. 9 is a cross-sectional view illustrating the fingerprint reader device according to an illustrative embodiment during a finger slide (part 2).
Fig. 10 is a plan view illustrating the fingerprint reader device according to the first embodiment of the present invention.
Fig. 11 is a cross-sectional view illustrating the fingerprint reader device according to the first embodiment of the present invention before a finger is slid.
Fig. 12 is a cross-sectional view illustrating the fingerprint reader device according to the first embodiment of the present invention during a finger slide (part 1).
Fig. 13 is a cross-sectional view illustrating the fingerprint reader device according to the first embodiment of the present invention during a finger slide (part 2).
Fig. 14 is a plan view illustrating the fingerprint reader device according to the second embodiment of the present invention.
Fig. 15 is a cross-sectional view illustrating the fingerprint reader device according to the second embodiment of the present invention before a finger is slid.
Fig. 16 is a cross-sectional view illustrating the fingerprint reader device according to the second embodiment of the present invention during a finger slide (part 1).
Fig. 17 is a cross-sectional view illustrating the fingerprint reader device according to the second embodiment of the present invention during a finger slide (part 2).

### Description of Reference Symbols

- 1: fingerprint sensor
- 2: front-side finger-slide surface
- 3: rear-side finger-slide surface
- 4, 5: guide sidewall
- 7 to 9: spring
- 32: movable front-side finger-slide surface
- 33: movable rear-side finger-slide surface
- 110A to 110C: fingerprint reader device
- F: finger
- FP: fingerprint
- J1: first joint

### Best Mode for Carrying Out the Invention

In the following, embodiments of the present invention will be described with reference to the accompanying drawings.

### [First Embodiment]

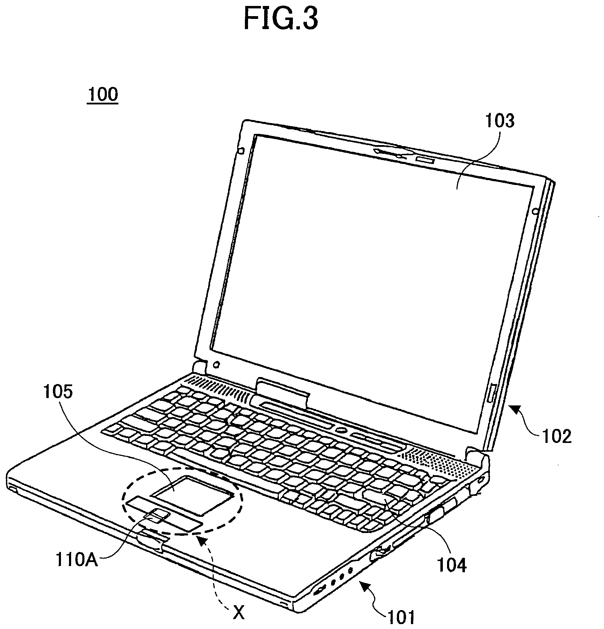

Fig. 3 through Fig. 5 illustrate an example in which a fingerprint reader device 110A is implemented as an illustrative example, comprising elements of but not reflecting all features of the present invention as defined in the appended claims. The present embodiment is directed to an example in which the fingerprint reader device 110A is incorporated into a personal computer 100 that is an example of an electronic apparatus. As illustrated in Fig. 3, the personal computer 100 includes a core part 101 having a keyboard 104, a flat point 105, and so on and a cover part 102 provided with a liquid crystal display 103 and so on.

The fingerprint reader device 110A is situated near the flat point 105. The fingerprint reader device 110A is a device for scanning a fingerprint FP of a finger F. The personal computer 100 has such hardware as a processing unit such as a CPU and a memory unit for storing programs and data. The processing unit of the personal computer 100 compares the fingerprint FP scanned by the fingerprint reader device 110A with the data stored in the memory unit in advance by use of a program stored in the memory unit. The processing unit controls whether to allow the use of the personal computer 100 in response to the result of the comparison. With this arrangement, only a person who has registered a fingerprint in advance can use the personal computer 100, which can improve security.

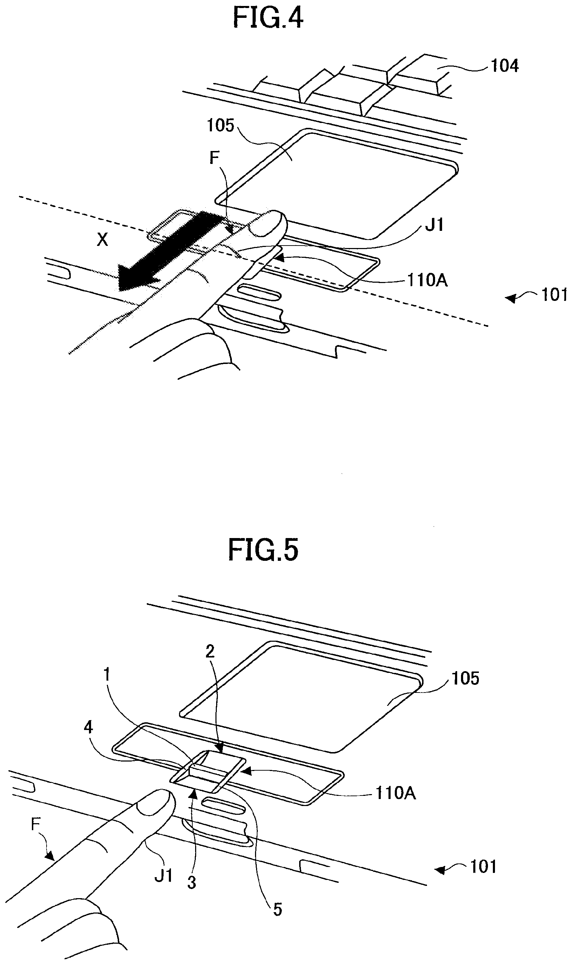

The fingerprint reader device 110A of the illustrative example is a slide-type fingerprint reader device that scans the fingerprint FP of the finger F being slid on the fingerprint sensor 1. Specifically, the finger F is placed on the fingerprint reader device 110A and slid in the direction of an arrow X to have the fingerprint scanned, as illustrated in Fig. 4. As was previously described, the finger F may need to be slid after the first joint portion J1 of the finger F to be slid is positioned at the center point O of the fingerprint sensor 1. Fig. 5 illustrates the end of scan.

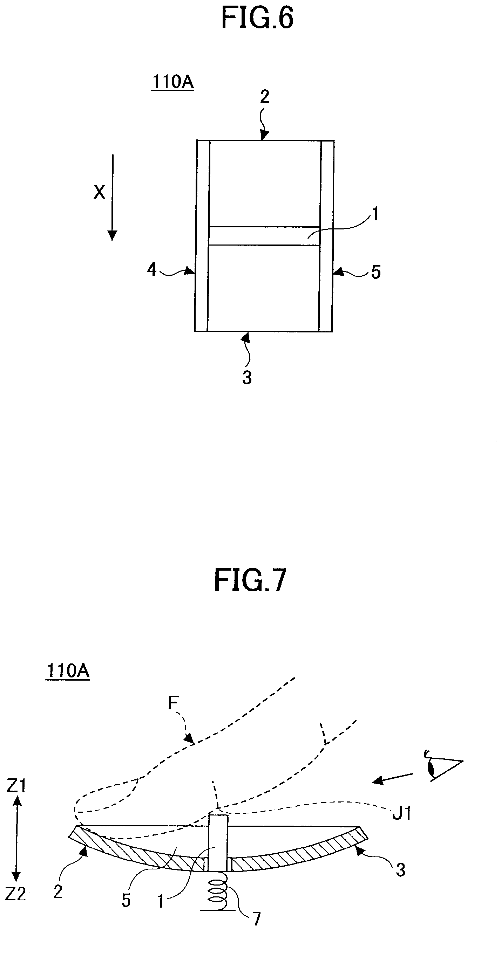

As illustrated in Fig. 5 and Fig. 6, the fingerprint reader device 110A of the illustrative example includes a fingerprint sensor 1, a front-side finger-slide surface 2, a rear-side finger-slide surface 3, a guide sidewall 4, and a guide sidewall 5, and so on.

The front-side finger-slide surface 2 and the rear-side finger-slide surface 3 constitute a slide surface on which the finger F is slid at the time of scanning the fingerprint FP. The front-side finger-slide surface 2 is situated on the front side of the fingerprint sensor 1 in the finger-F slide direction (i.e., the direction of the arrow X). The rear-side finger-slide surface 3 is situated on the rear side of the fingerprint sensor 1 in the finger-F slide direction (i.e., the direction of the arrow X) .

The guide sidewalls 4 and 5 are situated on both sides of the front-side finger-slide surface 2 and the rear-side finger-slide surface 3 constituting the surfaces on which the finger F is slid. The upper faces of the guide sidewalls 4 and 5 are set at such elevation as to be flush with the surface of the core part 101.

In contrast, the front-side finger-slide surface 2 and the rear-side finger-slide surface 3 have curved shape that bulges downwards when a cross-sectional view is taken, in order to ensure smooth sliding movement of the finger F (see Fig. 7). Accordingly, the elevation of the front-side finger-slide surface 2 and the rear-side finger-slide surface 3 are relatively low, compared with the elevation of the upper faces of the guide sidewalls 4 and 5. With this arrangement, the sides of the finger F are guided by the guide sidewalls 4 and 5 when the finger F is slid over the surfaces (i.e., the front-side finger-slide surface 2 and the rear-side finger-slide surface 3), thereby ensuring smooth finger slide movement.

In the following, a description will be given of the arrangement of the fingerprint sensor 1 in the fingerprint reader device 110A according to the illustrative example by referring to Fig. 6 and Fig. 7. The fingerprint reader device 110A of the illustrative example is configured such that the fingerprint sensor 1 is movable in the vertical direction (i.e., directions Z1 and Z2) relative to the surface on which the finger F is slid.

An elastic means to function as a movement mechanism for moving the fingerprint sensor 1 is provided at the bottom of the fingerprint sensor 1 (i.e., the backside of the finger-slide surfaces 2 and 3). This elastic means provides upward elastic urge for the fingerprint sensor 1 (in the direction of the arrow Z1 in the figure). The fingerprint sensor 1 moves toward the slide surface (in the direction of the arrow Z2) upon being pressed. The elastic means may be a spring, plastic, rubber, etc., and may be used in combination with a link mechanism or the like. The present example illustrates an example in which only a coil-shape spring 7 is used for the purpose of simplifying the structure.

In the configuration noted above, the fingerprint sensor 1 is shifted against the elastic force of the spring 7 in the direction Z2 in the figure upon being pressed. When this happens, the tip of the fingerprint sensor 1 is pressed down to the same elevation as the slide surface on which the finger F is slid.

Upon being released from the pressing, the fingerprint sensor 1 moves in the direction Z1 by the elastic restoration force of the spring 7 to return to its original position. When there is no pressing, the tip of the fingerprint sensor 1 is arranged to slightly bulge relative to the upper faces of the guide sidewalls 4 and 5 (see Fig. 7).

The bulge of the tip of the fingerprint sensor 1 from the upper faces of the guide sidewalls 4 and 5 as described above allows the position of the fingerprint sensor 1 to be checked on the near side of a lowered stretched finger when the finger F is lowered toward the fingerprint reader device 110A. The first joint J1 can thus be properly positioned relative to the fingerprint sensor 1.

Further, the sense of touch provided by the finger F is also utilized in addition to visual contact. The finger F is lowered toward the fingerprint reader device 110A such that the ball of the finger F is evenly in contact with the paired guides 4 and 5. The finger F then comes in contact with the fingerprint sensor 1 as illustrated in Fig. 7. At this time, care is taken such that the ball of the finger F does not touch the fingerprint sensor. Through the sense of touch provided by the finger F at this time, the position of the finger F relative to the fingerprint sensor 1 can be recognized by the feel of the finger F.

As the finger F is lowered towards the fingerprint reader device 110A, the finger F comes in contact with the fingerprint sensor 1 as illustrated in Fig. 7. Through the sense of touch provided by the finger F at this time, the position of the finger F relative to the fingerprint sensor 1 can be recognized by the feel of the finger F.

Accordingly, in 110A according to the present embodiment, the positional displacement of the first joint J1 of the finger F relative to the fingerprint sensor 1 can be directly recognized. With this arrangement, it is possible to adjust the position of the first joint J1 to place it at the center point O of the fingerprint sensor 1 even when the fingerprint sensor 1 is obscured behind the finger F. Namely, the movement mechanism (i.e., spring 7) and the fingerprint sensor 1 serve as a positioning device for positioning the first joint J1 of the finger F at the center point O of the fingerprint sensor 1.

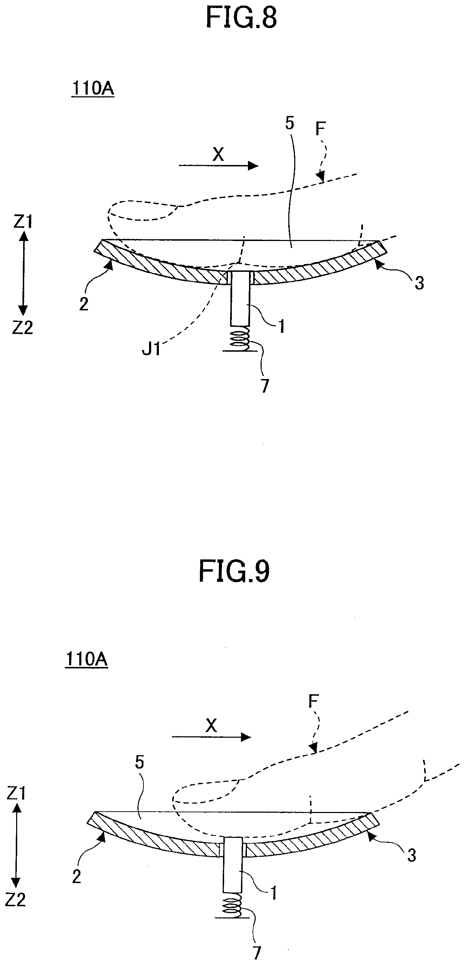

Upon confirming the correct position of the finger F as described above, the first joint J1 is pressed against the fingerprint sensor 1 as illustrated in Fig. 8. As a result, the fingerprint sensor 1 is pressed down to the same elevation as the slide surface (which is constituted by the front-side finger-slide surface 2 and the rear-side finger-slide surface 3).

Subsequently, the finger is slid at constant speed in the direction of the arrow X in the figure while pressing down the fingerprint sensor 1 with the ball of the finger F distal to the first joint J1 as illustrated in Fig. 9, thereby performing correct scanning of the fingerprint FP. In so doing, the fingerprint sensor 1 has been moved to the slide surface as described above, thereby not obstructing the sliding movement of the finger F.

In the fingerprint reader device 110A of the illustrative example, further, the fingerprint sensor 1 is urged upward (in the direction Z1) all the time by the spring 7. Because of this, the fingerprint sensor 1 is constantly pressed against the finger F by the elastic force of the spring 7 while the finger F slides over the fingerprint sensor 1.

In the case of a thin finger or tapering finger (many people have a tapering index finger) or in the case of a child or elderly person having an insufficient strength to press a finger to the sensor, the pressing of the finger against the sensor may become insufficient in the second half of a finger slide even when the first joint J1 of the finger F is correctly placed at the center position O of the fingerprint sensor 1. In such a case, an upper part of the image of the fingerprint FP may become missing or insufficient, thereby likely resulting in authentication failure.

In the illustrative example, however, the fingerprint sensor 1 is constantly urged upward by the spring 7 as described above, so that the fingerprint sensor 1 is constantly pressed against the finger F that is being slid. Accordingly, a correct image can be obtained even in the case of scanning the fingerprint FP of a thin finger or tapering finger or in the case of scanning the fingerprint FP for a child or an elderly person. This can further improve the authentication rate.

The example has illustrated a mode of operation in which the fingerprint sensor 1 is confirmed on the near side of the stretched finger being lowered when the first joint J1 is to come in contact with the fingerprint sensor 1. Notwithstanding this, another mode of operation may be used in which the finger is slid over the rear-side finger-slide surface 3 in the direction opposite the finger slide direction while stretching the finger F. In this mode of operation, the user brings the first joint J1 in contact with the fingerprint sensor 1 bulging from the rear-side finger-slide surface 3 (and avoids touching the fingerprint sensor 1 with the ball of the finger F) while causing the ball of the finger F to be evenly in contact with the guide sidewalls 4 and 5 by utilizing visual contact and the feel of the finger F. The user performs positional adjustment to move the finger F to a correct position, followed by pressing the fingerprint sensor 1 with the first joint J1. With this arrangement, a similar advantage to what was previously described is obtained.

### [First Embodiment]

Fig. 10 through Fig. 13 illustrate a fingerprint reader device 110B according to a first embodiment. In the fingerprint reader device 110A of the illustrative example described above, only the fingerprint sensor 1 is configured to move vertically (i.e., move in the directions Z1 and Z2) relative to the surface (constituted by the front-side finger-slide surface 2 and the rear-side finger-slide surface 3) on which the finger F is slid.

On the other hand, the fingerprint reader device 110B of the present embodiment is configured such that a movable front-side finger-slide surface 32 in addition to the fingerprint sensor 1 moves vertically (hereinafter the front-side finger-slide surface 2 of the present embodiment will be referred to as the movable front-side finger-slide surface 32) .

At the bottom of the movable front-side finger-slide surface 32, an elastic means is provided to serve as a finger-slide surface movement mechanism for moving the movable front-side finger-slide surface 32. This elastic means provides upward elastic urge for the movable front-side finger-slide surface 32 (in the direction of the arrow Z1 in the figure). The movable front-side finger-slide surface 32 moves (in the direction of the arrow Z2) toward the same elevation as the rear-side finger-slide surface 3 upon being pressed.

The elastic means may be a spring, plastic, rubber, etc., and may be used in combination with a link mechanism or the like. The present embodiment illustrates an example in which only a coil-shape spring 8 is used for the purpose of simplifying the structure.

Provision is made such that the tip of the fingerprint sensor 1 and the surface of the movable front-side finger-slide surface 32 can be pressed down to the same elevation as the rear-side finger-slide surface 3. Namely, the fingerprint sensor 1 and the movable front-side finger-slide surface 32 are in such a state as to bulge relative to the rear-side finger-slide surface 3 when a finger slide is not performed. The fingerprint sensor 1 and the sensor movement mechanism for moving the fingerprint sensor 1 have the same configuration that moves the fingerprint sensor 1 in the seventh embodiment, and a description thereof will be omitted.

In the configuration noted above, the fingerprint sensor 1 and the movable front-side finger-slide surface 32 are shifted against the elastic force of the springs 7 and 8 in the direction Z2 in the figure upon being pressed. Upon being released from the pressing, the fingerprint sensor 1 and the movable front-side finger-slide surface 32 move in the direction Z1 by the elastic restoration force of the springs 7 and 8 to return to their original position (bulging position).

In order to scan the fingerprint FP by use of the fingerprint reader device 110B having the configuration described above, the finger F is slid as illustrated in Fig. 11 over the rear-side finger-slide surface 3 in the direction (as illustrated by an arrow Y in Fig. 11) opposite the finger slide direction while stretching the finger F. In so doing, the sense of touch provided by the finger F is also utilized in addition to visual contact. The first joint J1 of the finger F is then brought in contact with the fingerprint sensor 1 bulging from the rear-side finger-slide surface 3 while ensuring that the ball of the finger F is evenly in contact with the paired guide sidewalls 4 and 5. At this point in time, care is taken to keep the ball of the finger F from touching the fingerprint sensor 1.

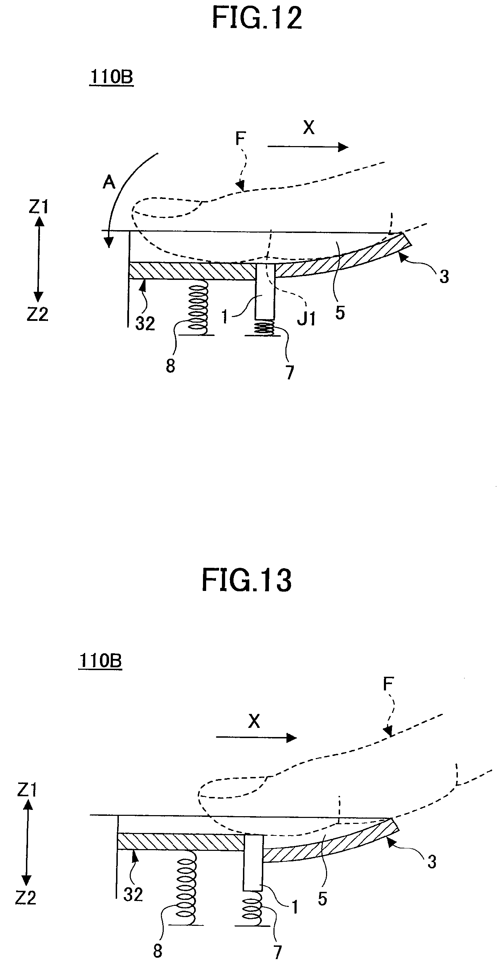

After performing positional adjustment to move the finger F to the correct position, the stretched finger F is tilted to press down the fingerprint sensor 1 and the movable front-side finger-slide surface 32 (i.e., pressing them down in the direction indicated by an arrow A in Fig. 12). As a result, the fingerprint sensor 1 and the movable front-side finger-slide surface 32 are pressed down to the same elevation as the rear-side finger-slide surface 3 as illustrated in Fig. 12.

In this manner, the first joint J1 can be placed at the center point O of the fingerprint sensor 1. After this, the finger F is slid at constant speed in the direction of the arrow X while pressing down the fingerprint sensor 1 with the ball of the finger F as illustrated in Fig. 13, thereby performing correct scanning of the fingerprint FP. In so doing, the fingerprint sensor 1, the movable front-side finger-slide surface 32, and the rear-side finger-slide surface 3 form a single continuous surface, so that the fingerprint sensor 1 and the movable front-side finger-slide surface 32 do not obstruct the sliding movement of the finger F.

With this arrangement, it is possible to adjust the position of the first joint J1 to place it at the center point O of the fingerprint sensor 1 even when the fingerprint sensor 1 is obscured behind the finger F. Namely, the finger-slide-surface movement mechanism (i.e., spring 8) and the movable front-side finger-slide surface 32 as well as the sensor movement mechanism (i.e., spring 7) and the fingerprint sensor 1 serve as a positioning device for positioning the first joint J1 of the finger F at the center point O of the fingerprint sensor 1.

In the present embodiment also, the fingerprint sensor 1 is constantly pressed against the finger F being slid, similarly to that of the seventh embodiment previously described. Accordingly, a correct image can be obtained even in the case of scanning the fingerprint FP of a thin finger or tapering finger or in the case of scanning the fingerprint FP for a child or an elderly person. This can further improve the authentication rate.

The above-described embodiment has been directed to an example in which the fingerprint sensor 1 and the movable front-side finger-slide surface 32 move independently of each other. Alternatively, the fingerprint sensor 1 and the movable front-side finger-slide surface 32 may be integrated so as to move together with each other.

### [Third Embodiment]

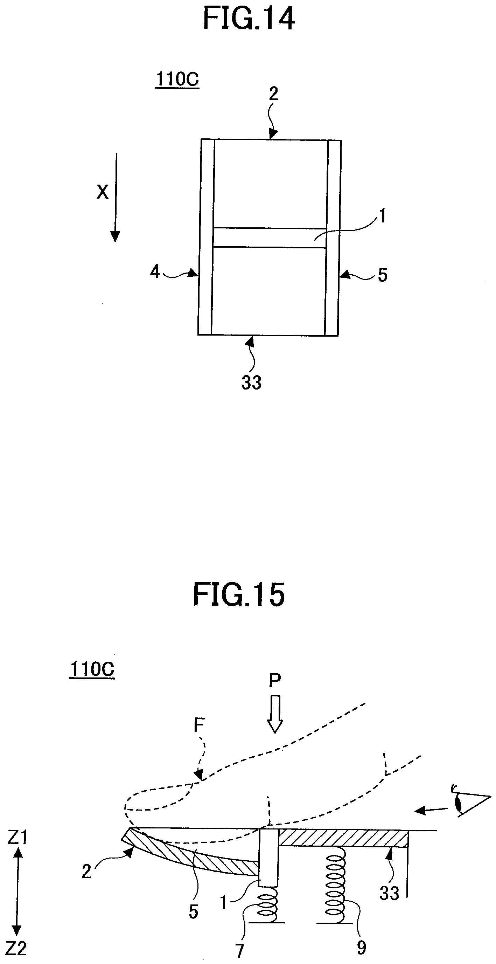

Fig. 14 through Fig. 17 illustrate a fingerprint reader device 110C according to a second embodiment. In the fingerprint reader device 110B of the first embodiment described above, only the fingerprint sensor 1 and the movable front-side finger-slide surface 32 are configured to move vertically (i.e., move in the directions Z1 and Z2) relative to the surface (constituted by the front-side finger-slide surface 2 and the rear-side finger-slide surface 3) on which the finger F is slid.

On the other hand, the fingerprint reader device 110C of the present embodiment is configured such that a movable rear-side finger-slide surface 3 in addition to the fingerprint sensor 1 moves vertically relative to the slide surface (hereinafter the rear-side finger-slide surface 3 of the present embodiment will be referred to as a movable rear-side finger-slide surface 33).

At the bottom of the movable rear-side finger-slide surface 33, an elastic means is provided to serve as a finger-slide surface movement mechanism for moving the movable rear-side finger-slide surface 33. This elastic means provides upward elastic urge for the movable rear-side finger-slide surface 33 (in the direction of the arrow Z1 in the figure). The movable rear-side finger-slide surface 33 moves toward the front-side finger-slide surface 2 (in the direction of the arrow Z2) upon being pressed.

The elastic means may be a spring, plastic, rubber, etc., and may be used in combination with a link mechanism or the like. The present embodiment illustrates an example in which only a coil-shape spring 9 is used for the purpose of simplifying the structure.

Provision is made such that the tip of the fingerprint sensor 1 and the surface of the movable rear-side finger-slide surface 33 can be pressed down to the same elevation as the front-side finger-slide surface 2. Namely, the fingerprint sensor 1 and the movable rear-side finger-slide surface 33 are in such a state as to bulge relative to the front-side finger-slide surface 2 when a finger slide is not performed (see Fig. 15). The fingerprint sensor 1 and the sensor movement mechanism for moving the fingerprint sensor 1 have the same configuration that moves the fingerprint sensor 1 in the illustrative example and first embodiment, and a description thereof will be omitted.

In the configuration noted above, the fingerprint sensor 1 and the movable rear-side finger-slide surface 33 are shifted against the elastic force of the springs 7 and 9 in the direction Z2 in the figure upon being pressed. Upon being released from the pressing, the fingerprint sensor 1 and the movable rear-side finger-slide surface 33 move in the direction Z1 by the elastic restoration force of the springs 7 and 9 to return to their original positions.

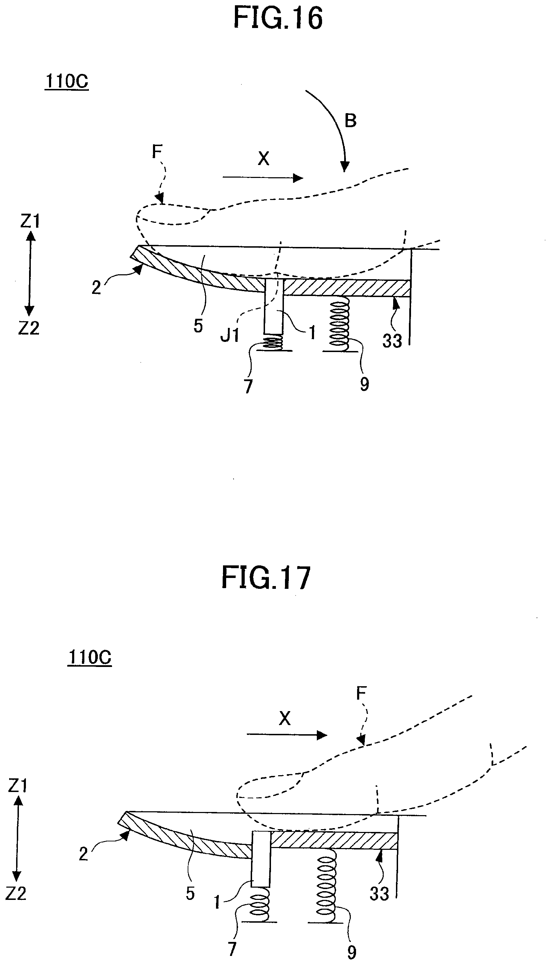

In order to scan the fingerprint FP by use of the fingerprint reader device 110C having the configuration described above, the finger F is slid as illustrated in Fig. 15 over the front-side finger-slide surface 2 in the finger-slide direction (as illustrated by an arrow X in Fig. 16) while stretching the finger F. In so doing, the sense of touch provided by the finger F is also utilized in addition to visual contact. The first joint J1 of the finger F is then brought in contact with the fingerprint sensor 1 bulging from the front-side finger-slide surface 2 while ensuring that the ball of the finger F is evenly in contact with the paired guide sidewalls 4 and 5.

After performing positional adjustment to move the finger F to the correct position, the stretched finger F is tilted to press down the fingerprint sensor 1 and the movable rear-side finger-slide surface 33 (i.e., pressing them down in the direction indicated by an arrow B in Fig. 16). As a result, the fingerprint sensor 1 and the movable rear-side finger-slide surface 33 are pressed down to the same elevation as the front-side finger-slide surface 2 as illustrated in Fig. 16.

In this manner, the first joint J1 can be placed at the center point O of the fingerprint sensor 1. After this, the finger F is slid at constant speed in the direction of the arrow X while pressing down the fingerprint sensor 1 with the ball of the finger F as illustrated in Fig. 17, thereby performing correct scanning of the fingerprint FP. In so doing, the fingerprint sensor 1, the movable rear-side finger-slide surface 33, and the front-side finger-slide surface 2 form a single continuous surface, so that the fingerprint sensor 1 and the movable rear-side finger-slide surface 33 do not obstruct the sliding movement of the finger F.

With this arrangement, it is possible to adjust the position of the first joint J1 to place it at the center point O of the fingerprint sensor 1 even when the fingerprint sensor 1 is obscured behind the finger F. Namely, the finger-slide-surface movement mechanism (i.e., spring 9) and the movable rear-side finger-slide surface 33 as well as the sensor movement mechanism (i.e., spring 7) and the fingerprint sensor 1 serve as a positioning device for positioning the first joint J1 of the finger F at the center point O of the fingerprint sensor 1.

In the present embodiment also, the fingerprint sensor 1 is constantly pressed against the finger F being slid, similarly to that of the first and second embodiments previously described. Accordingly, a correct image can be obtained even in the case of scanning the fingerprint FP of a thin finger or tapering finger or in the case of scanning the fingerprint FP for a child or an elderly person. This can further improve the authentication rate.

The above-described embodiment has been directed to an example in which the fingerprint sensor 1 and the movable rear-side finger-slide surface 33 move independently of each other. Alternatively, the fingerprint sensor 1 and the movable rear-side finger-slide surface 33 may be integrated so as to move together with each other.

## Claims

1. A fingerprint reader device (110B), comprising:
a slide-type fingerprint sensor (1); and
a positioning structure, comprising a finger-slide surface (3, 32) and guide sidewalls (4, 5) situated on both sides of the finger-slide surface, for positioning a first joint portion of a finger (F) at a center point (O) of the fingerprint sensor (1), wherein
the positioning structure includes a sensor movement mechanism configured to keep the fingerprint sensor (1) at a position bulging from the finger-slide surface, on which the finger is slid at the time of scanning, when the fingerprint sensor (1) is not pressed down, and allow the fingerprint sensor (1) to move towards the finger-slide surface upon being pressed down, where an elastic means (7) is configured to provide upwards elastic urge for the fingerprint sensor (1), **characterised in that** the finger-slide surface includes a movable front-side finger-slide surface (32) situated anterior to the position of the fingerprint sensor (1) in a finger-slide direction, and a rear-side finger-slide surface (3) situated posterior to the position of the fingerprint sensor (1) in the finger-slide direction, and
the movable front-side finger-slide surface (32) is configured to move vertically, and, when not pressed down, to bulge relative to the rear-side finger-slide surface (3), the fingerprint reader device further comprising:
a finger-slide-surface movement mechanism (8) configured to keep the movable front-side finger-slide surface (32) at a position bulging from the rear-side finger-slide surface (3) when the movable front-side finger-slide surface (32) is not pressed down, and to allow the movable front-side finger-slide surface (32) to move upon being pressed down.

2. A fingerprint reader device (110C), comprising:
a slide-type fingerprint sensor (1); and
a positioning structure, comprising a finger-slide surface (2, 33) and guide sidewalls (4, 5) situated on both sides of the finger-slide surface, for positioning a first joint portion of a finger (F) at a center point (O) of the fingerprint sensor (1), wherein
the positioning structure includes a sensor movement mechanism configured to keep the fingerprint sensor (1) at a position bulging from the finger-slide surface, on which the finger is slid at the time of scanning, when the fingerprint sensor (1) is not pressed down, and allow the fingerprint sensor (1) to move towards the finger-slide surface upon being pressed down, where an elastic means (7) is configured to provide upwards elastic urge for the fingerprint sensor (1), **characterised in that** the finger-slide surface includes a front-side finger-slide surface (2) situated anterior to the position of the fingerprint sensor (1) in a finger-slide direction, and a movable rear-side finger-slide surface (33) situated posterior to the position of the fingerprint sensor (1) in the finger-slide direction, and
the movable rear-side finger-slide surface (33) is configured to move vertically, and, when not pressed down, to bulge relative to the front-side finger-slide surface (2), the fingerprint reader device further comprising:
a finger-slide-surface movement mechanism (9) configured to keep the movable rear-side finger-slide surface (33) at a position bulging from the front-side finger-slide surface (2) when the movable rear-side finger-slide surface (33) is not pressed down, and to allow the movable rear-side finger-slide surface (33) to move upon being pressed down.

3. An electronic apparatus, comprising:
the fingerprint reader device as claimed in claim 1 or claim 2; and
a processing unit configured to process data scanned by the fingerprint sensor (1) of the fingerprint reader device.

## Patentansprüche

1. Fingerabdruck-Lesegerät (110B), das Folgendes umfasst:
einen Fingerabdrucksensor (1) vom Zieh-Typ und
eine Positionierkonstruktion zum Positionieren eines ersten Gelenkabschnitts eines Fingers (F) an einem Mittelpunkt (O) des Fingerabdrucksensors (1), die eine Fingerziehfläche (3, 32) und Führungsseitenwände (4, 5) zu beiden Seiten der Fingerziehfläche umfasst, wobei die Positionierkonstruktion einen Sensorbewegungsmechanismus aufweist, der so konfiguriert ist, dass er den Fingerabdrucksensor (1) in einer Position hält, in der dieser von der Fingerziehfläche, an der der Finger zum Zeitpunkt des Abtastens entlanggezogen wird, vorsteht, wenn er nicht heruntergedrückt wird, und es dem Fingerabdrucksensor (1) ermöglicht, sich bei einem Herunterdrücken zur Fingerziehfläche hin zu bewegen, wobei ein elastisches Mittel (7) so konfiguriert ist, dass es eine nach oben gerichtete Federkraft für den Fingerabdrucksensor (1) bereitstellt,
**dadurch gekennzeichnet, dass**
die Fingerziehfläche eine bewegliche vordere Fingerziehfläche (32), die sich in Fingerziehrichtung vor der Position des Fingerabdrucksensors (1) befindet, und eine hintere Fingerziehfläche (3) aufweist, die sich in Fingerziehrichtung hinter der Position des Fingerabdrucksensors (1) befindet, und
die bewegliche vordere Fingerziehfläche (32) so konfiguriert ist, dass sie sich vertikal bewegt und, wenn sie nicht heruntergedrückt wird, in Bezug zu der hinteren Fingerziehfläche (3) vorsteht, wobei das Fingerabdruck-Lesegerät ferner Folgendes umfasst:
einen Fingerziehflächen-Bewegungsmechanismus (8), der so konfiguriert ist, dass er die bewegliche vordere Fingerziehfläche (32) in einer Position hält, in der sie von der hinteren Fingerziehfläche (3) vorsteht, wenn die bewegliche vordere Fingerziehfläche (32) nicht heruntergedrückt wird, und es ermöglicht, dass sich die bewegliche vordere Fingerziehfläche (32) bei einem Herunterdrücken bewegt.

2. Fingerabdruck-Lesegerät (110C), das Folgendes umfasst:
einen Fingerabdrucksensor (1) vom Zieh-Typ und
eine Positionierkonstruktion zum Positionieren eines ersten Gelenkabschnitts eines Fingers (F) an einem Mittelpunkt (O) des Fingerabdrucksensors (1), die eine Fingerziehfläche (2, 33) und
Führungsseitenwände (4, 5) zu beiden Seiten der Fingerziehfläche umfasst, wobei die Positionierkonstruktion einen Sensorbewegungsmechanismus aufweist, der so konfiguriert ist, dass er den Fingerabdrucksensor (1) in einer Position hält, in der dieser von der Fingerziehfläche, an der der Finger zum Zeitpunkt des Abtastens entlanggezogen wird, vorsteht,
wenn er nicht heruntergedrückt wird, und es dem Fingerabdrucksensor (1) ermöglicht, sich bei einem Herunterdrücken zur Fingerziehfläche hin zu bewegen, wobei ein elastisches Mittel (7) so konfiguriert ist, dass es eine nach oben gerichtete Federkraft für den Fingerabdrucksensor (1) bereitstellt,
**dadurch gekennzeichnet, dass**
die Fingerziehfläche eine vordere Fingerziehfläche (2), die sich in Fingerziehrichtung vor der Position des Fingerabdrucksensors (1) befindet, und eine bewegliche hintere Fingerziehfläche (33) aufweist, die sich in Fingerziehrichtung hinter der Position des Fingerabdrucksensors (1) befindet, und
die bewegliche hintere Fingerziehfläche (33) so konfiguriert ist, dass sie sich vertikal bewegt und, wenn sie nicht heruntergedrückt wird, in Bezug zu der vorderen Fingerziehfläche (2) vorsteht, wobei das Fingerabdruck-Lesegerät ferner Folgendes umfasst:
einen Fingerziehflächen-Bewegungsmechanismus (9), der so konfiguriert ist, dass er die bewegliche hintere Fingerziehfläche (33) in einer Position hält, in der sie von der vorderen Fingerziehfläche (2) vorsteht, wenn die bewegliche hintere Fingerziehfläche (33) nicht heruntergedrückt wird, und es ermöglicht, dass sich die bewegliche hintere Fingerziehfläche (33) bei einem Herunterdrücken bewegt.

3. Elektronische Vorrichtung, die Folgendes umfasst:
das Fingerabdruck-Lesegerät nach Anspruch 1 oder 2 und
eine Verarbeitungseinheit, die so konfiguriert ist, dass sie Daten verarbeitet, die von dem Fingerabdrucksensor (1) des Fingerabdruck-Lesegeräts abgetastet werden.

## Revendications

1. Dispositif de lecteur d'empreintes digitales (110B), comprenant :
un capteur d'empreintes digitales de type à glissement (1) ; et
une structure de positionnement, comprenant une surface de glissement de doigt (3, 32) et des parois latérales de guidage (4, 5) situées sur les deux côtés de la surface de glissement de doigt, pour positionner une première partie d'articulation d'un doigt (F) au niveau d'un point central (0) du capteur d'empreintes digitales (1), dans lequel
la structure de positionnement comprend un mécanisme de déplacement de capteur configuré pour maintenir le capteur d'empreintes digitales (1) à une position bombée par rapport à la surface de glissement de doigt, sur laquelle le doigt glisse au moment du balayage, lorsque le capteur d'empreintes digitales (1) n'est pas pressé vers le bas, et permettre au capteur d'empreintes digitales (1) de se déplacer vers la surface de glissement de doigt après avoir été pressé vers le bas, dans lequel des moyens élastiques (7) sont configurés pour fournir une poussée élastique vers le haut pour le capteur d'empreintes digitales (1),
**caractérisé en ce que**
la surface de glissement de doigt comprend une surface de glissement de doigt avant mobile (32) située de manière antérieure à la position du capteur d'empreintes digitales (1) dans une direction de glissement de doigt, et une surface de glissement de doigt arrière (3) située de manière postérieure à la position du capteur d'empreintes digitales (1) dans la direction de glissement de doigt, et
la surface de glissement de doigt avant mobile (32) est configurée pour se déplacer verticalement, et, lorsqu'elle n'est pas pressée vers le bas, pour se bomber par rapport à la surface de glissement de doigt arrière (3), le dispositif de lecteur d'empreintes digitales comprenant en outre :
un mécanisme de déplacement de surface de glissement de doigt (8) configuré pour maintenir la surface de glissement de doigt avant mobile (32) à une position bombée par rapport à la surface de glissement de doigt arrière (3) lorsque la surface de glissement de doigt avant mobile (32) n'est pas pressée vers le bas, et pour permettre à la surface de glissement de doigt avant mobile (32) de se déplacer après avoir été pressée vers le bas.

2. Dispositif de lecteur d'empreintes digitales (110C), comprenant :
un capteur d'empreintes digitales de type à glissement (1) ; et
une structure de positionnement, comprenant une surface de glissement de doigt (2, 33) et des parois latérales de guidage (4, 5) situées sur les deux côtés de la surface de glissement de doigt, pour positionner une première partie d'articulation d'un doigt (F) au niveau d'un point central (0) du capteur d'empreintes digitales (1), dans lequel
la structure de positionnement comprend un mécanisme de déplacement de capteur configuré pour maintenir le capteur d'empreintes digitales (1) à une position bombée par rapport à la surface de glissement de doigt, sur laquelle le doigt glisse au moment du balayage, lorsque le capteur d'empreintes digitales (1) n'est pas pressé vers le bas, et permettre au capteur d'empreintes digitales (1) de se déplacer vers la surface de glissement de doigt après avoir été pressé vers le bas, dans lequel des moyens élastiques (7) sont configurés pour fournir une poussée élastique vers le haut pour le capteur d'empreintes digitales (1),
**caractérisé en ce que**
la surface de glissement de doigt comprend une surface de glissement de doigt avant (2) située de manière antérieure à la position du capteur d'empreintes digitales (1) dans une direction de glissement de doigt, et une surface de glissement de doigt arrière mobile (33) située de manière postérieure à la position du capteur d'empreintes digitales (1) dans la direction de glissement de doigt, et
la surface de glissement de doigt arrière mobile (33) est configurée pour se déplacer verticalement, et, lorsqu'elle n'est pas pressée vers le bas, pour se bomber par rapport à la surface de glissement de doigt avant (2), le dispositif de lecteur d'empreintes digitales comprenant en outre :
un mécanisme de déplacement de surface de glissement de doigt (9) configuré pour maintenir la surface de glissement de doigt arrière mobile (33) à une position bombée par rapport à la surface de glissement de doigt avant (2) lorsque la surface de glissement de doigt arrière mobile (33) n'est pas pressée vers le bas, et pour permettre à la surface de glissement de doigt arrière mobile (33) de se déplacer après avoir été pressée vers le bas.

3. Appareil électronique, comprenant :
le dispositif de lecteur d'empreintes digitales selon la revendication 1 ou la revendication 2 ; et
une unité de traitement configurée pour traiter des données balayées par le capteur d'empreintes digitales (1) du dispositif de lecteur d'empreintes digitales.
